# EUROPEAN PATENT SPECIFICATION

(11) **EP 2 406 306 B1**
(45) Date of publication and mention of the grant of the patent: **30.10.2013**
(21) Application number: 10706462.8
(22) Date of filing: 01.03.2010
(51) Int. Cl.: C08K 5/523

(54) **FLAME RETARDED POLYOLEFIN COMPOSITION**
FLAMMGESCHÜTZTE POLYOLEFINZUSAMMENSETZUNG
COMPOSITION POLYOLÉFINIQUE IGNIFUGEANTE

(30) Priority: 08.04.2009 US 212209 P; 09.03.2009 US 209611 P
(43) Date of publication of application: 18.01.2012
(73) Proprietor: ICL-IP America Inc., Ardsley, NY 10502 (US)
(72) Inventor: LEVCHIK, Sergei, V., Croton-on-hudson NY 10520 (US); ALESSIO, Gerald, R., Emerson NJ 07630 (US); GEORLETTE, Pierre, 84965 Omer (IL)
(74) Representative: De Vries & Metman
(86) International application number: PCT/US2010/025743
(87) International publication number: WO 2010/104689

(56) References cited:
- EP-A2- 0 509 506
- WO-A1-2008/027536
- FR-A1- 2 763 952
- US-A1- 2003 138 626

## Description

### FIELD OF THE INVENTION

This invention relates to a fire retarded polyolefin composition. Specifically this invention relates to providing a fire retarded polypropylene composition. More specifically this invention relates to a polypropylene extruded fiber or film or foam which is flame retarded.

### DESCRIPTION OF THE PRIOR ART

Polyolefins, e.g., polyethylene and polypropylene fibers, are high volume/low cost synthetics that are remarkable for their stain and abrasion resistance. As with all plastics, certain uses have required that the flammability of the polymer be reduced. When decreased flammability has been required, it has generally not been provided by the polyolefin fiber itself, but has instead been provided by one of the other components in the fabricated article. In carpeting, for example, enough fire retardant can be loaded into the latex binder to provide a measure of protection for the polyolefin face fiber.

The present invention also relates to flame retardant polyolefin foam suitable for the production of thermal insulation materials, cushioning packaging materials, returnable delivery boxes, automobile bumper core, electrical and electronic parts, particularly electrical and electronic parts, and to in-mold foamed articles prepared by in-mold foaming of the pre-expanded particles. Polypropylene in-mold foaming products are superior in chemical resistance, heat resistance, impact resistance and distortion restoration rate after compression as compared to polystyrene in-mold foaming products. Thus, they have been widely used as cushioning packaging materials, returnable delivery boxes, automobile parts such as bumper core, side impact energy absorber and floor material, and others.

There remains a need for a satisfactory fire retardant additive, or additives, for polyolefins, especially polyolefin fibers or films or foams. In selecting such additives, care must be taken that the additive does not after the properties of the resin, e.g., color, flexibility, tensile strength, electrical properties, softening point, hardness, and the like. However, to date, there has hot been provided a suitable system which will impart fire retardancy to polyolefins without unsatisfactorily affecting some of the aforementioned desirable properties of the polyolefin. These desirable properties are particularly important in fabrics for household and personal use, such as in clothing and furniture coverings.

One problem with known flame retardant additives for polyolefins is the difficulty of effectively dispersing these additives into the molten polyolefin. Flame retardant additives for polyolefins are generally powders which do not dissolve in the polyolefin. Because of this lack of solubility, localized concentrations of undispersed flame retardant will occur. This localized concentration will cause plugging of the spinnerette and filament breakage, requiring a shutdown of the spinning process. One method is to pre-disperse the additives in a suitable thermosplastic resin to form concentrated plastic pellets containing the modifiers. This method, of course, requires additional and costly steps tn the production process.

The prior art has sought to incorporate certain additives into the thermoplastic melt in an attempt to provide an inherent flame retardant polypropylene. Some examples of such can be found in U.S. Pat. Nos. 3,650,300; 3,663,502; 3,894,876; 3,894,121; and, 3, 800,010. Unfortunately, these compositions contain halogen or are not soluble in polyolefins resulting in the plugging of processing equipment such as the die.

The prior art has also sought to incorporate certain flame retardants car combinations thereof in an attempt to provide flame retardant polypropylene fibers. Some such examples can be found in U.S. Patent No. 4,532,278 which describes the use of high melting aromatic brominated flame retardants like tetrabromobisphenol A, octabromo diphenyl oxide or decabromodiphenyl oxide in combination with tris(hydroxybenzyl) isocyanurate in polypropylene fibers; and, U.S. Patent No. 5,618,623 which describes the use of decabromodiphenylethane in combination with antimony trioxide in polypropylene fibers. Both of these patents describe the use of highly meltable brominated flame retardants which will cause the problem of plugging of spinnerettes.

In U.S. Patent No. 5,380,802 polypropylene fibers were flame retarded by graft copolymerization with dibromostyrene and further addition of bisdibromopropyl ether of tetrabromobisphenol A. This is a multistep process, which is difficult to control. U.S. Patent No. 6,737,456 discloses the use of a brominated compound in combination with a free radical source in polyolefins and more specifically polyolefin fibers. This combination provides melt-blendable composition with polypropylene, but it still retains the undesirable nature of halogen content, U.S. Patent No. 4,139,476 describes the use of liquid phosphonate in polypropylene fibers. The phosphonate is applied topically and remains on the surface, or close to surface of the polyolefin and is subject to migration.

In U.S. Patent Nos. 6,921,504 and 6,924,032 the flame retardancy of polypropylene fibers and films is achieved by incorporating a combination of aromatic polyphosphate and NOR type hindered amine stabilizer. Since the stabilizer is consumed by UV radiation over time, these fibers eventually loose their flame retardancy.

In European Patent No. 1,452,559 and U.S. Patent No. 6,822,023 flame retardant propylene-ethylene random copolymer foam was manufactured by incorporating NOR type amine stabilizer and carbon black as a coloring agent. In-mold foamed articles were produced by placing pre-expanded copolymer particles in a mold and heating the mold with steam in order to expand and fuse particles together.

EP0509506 discloses crystalline powders of aromatic diphosphates and their use, as flame retarding agents, in thermoplastic resins.

FR 2763952 discloses flame-retardant compositions comprising a resin and a flame-retardant such as aromatic diphosphates.

WO 2008/027536 discloses the use of hydroquinone-based phosphates as flame retardants in resin compositions, including styrenic polymers and copolymers, polyphenylene oxide (PPO), acrylonitrile butadiene styrene (ABS), polycarbonate (PC) and mixtures thereof.

### SUMMARY OF THE INVENTION

The present inventors have unexpectedly discovered that the use of a solid phosphate ester as defined in claim 1 operates effectively as a flame retardant for a polyolefin, preferably a polyolefin fiber or film or foam, more preferably an extruded polyolefin fiber or film. The polyolefin composition herein is a flame-retarded polyolefin composition that avoids the herein-described handling and/or processing problems. Specifically, there is provided a polyolefin composition, e.g., in the form of flame-retarded polyolefin fibers and/or films and/or foams, that avoids the costly and more complicated means for avoiding the herein-described handling and/or processing problems associated with flame-retarding polyolefins. Solid phosphate esters of the present invention don't exude and have a high content of phosphorous.

There is provided herein a polyolefin composition comprising a polyolefin and a flame retardant effective amount of a solid phosphate ester of the general formula (1): 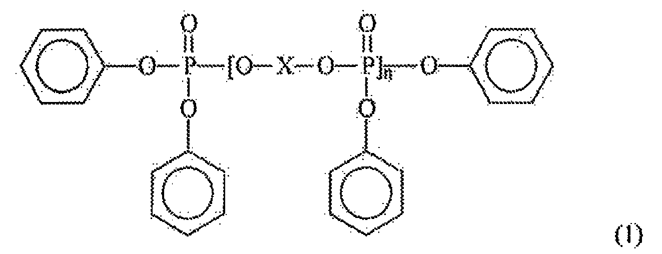 wherein n has an average value of from 1.0 to 2.0 and X is a divalent arylene moiety bonded to both of the oxygen atoms of hydroquinone, and wherein the phosphate ester is in the absence of halogen.

### DETAILED DESCRIPTION OF THE INVENTION

The polyolefins useful in the composition herein (also referred to as "polyolefin resins") may be derived from a variety of monomers, preferably from propylene, ethylene, butene, isobutylene, pentene, hexene, heptene, octene, 2-methyl propene, 2-methyl butene, 4-methylpentene, 4-methyl hexene, 5-methyl hexene, bicyclo (2,2,1)-2-heptene, butadiene, pentadiene, hexadiene, isoprene, 2,3 dimethyl butadiene, 3,1 methyl pentadiene 1,3,4 vinyl cyclo hexene, vinyl cyclohexene, cyclopentadiene, styrene, methyl styrene and combinations thereof. The polyolefins include copolymers produced from any of the foregoing monomers, and further include homopolymer blends, copolymer blends, and homopolymer-copolymer blends of the foregoing polyolefins.

The polyolefin herein may be in a molding grade, fiber grade, film grade or extrusion grade

The preferred polyolefins are polypropylene and polyethylene, including atactic, syndiotactic and isotactic polypropylene, low density polyethylene, high density polyethylene, linear low density polyethylene, block copolymers of ethylene and propylene, and random copolymers of ethylene and propylene. The polyolefins useful in this invention may be produced using a variety of catalytic processes including metallocene-catalyzed processes. The polymers may have a broad range of melt flow indexes (MFI) but will typically have MFI values in the range 0.5 to 30. The invention finds particular applications in polymers, which are fabricated into finished articles by molding processes. Preferred grades are fiber grades, film grades, molding grades, and extrusion moleded grades.

In one non-limiting embodiment herein the polyolefin is in the form of a fiber or a film or a foam and any combinations thereof. Specifically, the fibers and films can be used in carpeting, textiles, upholstery, clothing. Films can be used in calendaring, wall covering, packaging, green houses. Foams can be used as cushioning packaging materials, returnable delivery boxes, and automobile parts such as bumper core, side impact energy absorber, and automotive floor materials.

The polyolefin fibers and films and foams of this invention can include polypropylene or polyethylene fibers and films and foams mainly composed of a polypropylene or polyethylene resin capable of melting such as a copolymer of ethylene or propylene with other a-olefin monomer or fibers and films and foams mainly composed of a propylene or polyethylene homopolymer.

In one embodiment the polyolefin is selected from polyethylene and its copolymers. In another embodiment the polyolefin is selected from polypropylene and its copolymers.

In one embodiment herein the polyolefin can comprise from 99.5 weight percent to 95 weight percent, preferably from 99.5 weight percent to 97 weight percent of the polyolefin composition, said weight percent being based on the total weight of the polyolefin composition.

In one embodiment herein the solid phosphate ester is at least one of oligomeric aromatic bisphosphates or blends of oligomeric aromatic phosphates having the general formula (1) as described above.

In one non-limitmg embodiment, a flame retardant effective amount will vary greatly depending on the intended application of the polyolefin composition as well as the specific components used and the processing parameters, and as such, a flame retardant effective amount is any amount that will provide a desired flame retardant effect to the polyolefin composition and can be determined by those skilled in the art. In one non-limiting embodiment the flame retardant effective amount can be from 0.5 to 5 weight percent, preferably from 0.5 to 3.0 weight percent, said weight percent being based on the total weight of the polyolefin composition.

The solid phosphate ester is hydroquinone bis-phosphate flame retardant having the structure of formula (1) where n has an average value of from 1.0 to 2.0, preferably from 1.0 to less than or equal to 1.2, and more preferably from 1.0 to 1.1.

In one preferable embodiment, the phosphate ester is hydroquinone bis(diphneyl phosphate).

In one embodiment the solid phosphate ester has a melting temperature of at least 80°C and preferably at least 100°C.

In one aspect of the present invention, solid phosphate within general formula (1), wherein n has an average value of 1.0 to 1.1 and X is the divalent arylene moiety bonded to both oxygen atoms of hydroquinone, are in the form of free-flowing powders which melt at the temperature above 80°C. These free-flowing powders, when compounded with polyolefins, avoid various handling problems as well as impart improved physical properties such as, UV stability and greater hydrolytic stability to polyolefin compositions. Some handling problems are that liquid phosphate esters outside the scope of this invention, require expensive feeding systems which are difficult to maintain and operate. Low melting solids tend to melt in the extruder throat or feeder funnel and require frequent interruption in the process for cleaning.

In another embodiment of this invention solid phosphates can be manufactured in the form of flakes or pellets. Flakes or pellets further improve handling of solid oligomeric phosphate because of decrease of dusting.

In general, the solid hydroquinone phosphates of the present invention are prepared by reacting a diaryl halophosphate with hydroquinone in the presence of a catalyst. In a preferred embodiment of the invention, diphenylchlorophosphate (DPCP) is reacted with hydroquinone in the presence of MgCl₂ to produce hydroquinone bis-(diphenylphosphate). In accordance with the present invention, hydroquinone bis (diphenylphosphate) within general formula (1) prepared by this process will have an average n value of about 1.1 or less.

It is important that the polyolefin fibers or films or foams comprising the polyolefin composition herein contains from 0.5 % to 5.0% by weight of solid phosphate.

The polyolefin composition may further comprise one or more additional additives which are known in the art, such as, for example, ultraviolet and light stabilizers, UV screeners, UV absorbers, heat stabilizers and antioxidants. Further, other additives such as a coloring pigment, dispersing agent, fluorescent bleaching agent, delustering agent, lubricant, anti-static agent, antibacterial agent and combinations thereof may be compounded within a range which does not damage fiber and film and foam physical properties.

The free radical generators used in accordance with the present invention are organic comppunds which are stable at the processing temperatures of from 150° C. to 250° C., and decomposes above these temperatures (at from 220° C. to 350° C.) to give relatively stable free radicals.

Free radical generators are preferably organic compounds which generate stable free radicals upon thermal decomposition. Free radical generators must be extrudable at the extrusion temperature for the polyolefin and must be compatible with the polyolefin and any dispersant in the composition. Also, the free radical generator should have an acceptable vapor pressure and a half-life of at least about 1 hour at 110°C. and preferably 15 hours at 110°C.

The free radical initiator may be present in at least 0.2 percent and preferably 0.5 percent by weight based on the total weight of the polyolefin composition. Generally, the free radical generator is not present in excess of 1 percent by weight based on the total weight of the polyolefin composition because the function it is to perform is ably accomplished with lesser amounts and because amounts in excess of 1 percent generally begin to contribute processing and economic problems to the polyolefin composition.

Since an intimate contact between the polyolefin and phosphate ester and any other optional additives of this invention is desired, the free radical generator should be capable of being substantially uniformly dispersed within the polyolefin. Therefore, it must be in particulate solid, gaseous or liquid form. A large particle size would be acceptable if the compound became fluid at, or just prior to, reaction temperature.

Some non-limiting examples of free radical generators are at least one of 2,3-dimethyl-2,3-diphenyl-butane; 2,3-dimethyl-2,3-diphenyl-hexane; bis(alpha-phenylethyl) sulfone; 1,1'-diphenylbicyclohexyl, 2,2'-dimethyl-2,2'azobutane; 2,2'dibromo-2,2'-azobutane; 2,2'-dichloro-2,2'azobutane; 2,2'dimethyl-2,2'azobutane-3,3'4,4'-tetracarboxylic acid; dicumyl peroxide; benzoyl peroxide; 2,5-dimethyl-2, 5-bis (tert butylperoxy) hexane; 2, 5-dimethly-2,5-bis (tert butylperoxy) hexyne-3; di (tert butyl) peroxide; hydroperoxides, e.g., 2,5-dimethylhexane-2, 5-dihydroperoxide; tertiary butyl hydroperoxide; and cumene hydroperoxide; as for example, where one such free radical generator will not by itself fully satisfy the requirements given herein for such a polyolefin composition, but a combination of two or more such free radical generators as defined herein does satisfy these requirements.

In another embodiment herein the ultraviolet and light stabilizer is selected from the group not comprising NOR type hindered amine stabilizers.

In one non-limiting embodiment herein, the polyolefin composition is in the absence of hindered amine light stabilizer, spesifically in the absence of NOR type hindered amine light stabilizer (HALS).

In one embodiment herein there is provided a polyolefin fiber comprising the polyolefin composition herein, and there is also provided a polyolefin textile comprising the polyolefin fiber. In one embodiment herein there is provided a flame retarded polyolefin composition as described herein ("polyolefin composition") wherein the polyolefin is a polyolefin fiber. In another embodiment there is provided herein a polyolefin fiber that has been treated with at least one phosphate ester, e.g., a solid phosphate ester as described herein. Treatment can comprise means known to those skilled in the art such as compounding, extruding, mixing etc. In yet another embodiment there is provided a polyolefin composition wherein the polyolefin is a polyethylene and/or polypropylene fiber.

In another embodiment there is provided a polyolefin film comprising the polyolefin composition herein. The polyolefin film can having a thickness of 500 µm or less, preferably 300 µm or less, and most preferably 100 µm or less. In one embodiment herein there is provided a polyolefin film comprising a flame retardant effective amount of at least one phosphate ester, e.g. a solid phosphate ester as described herein. In another embodiment there is provided herein a polyolefin film that has been treated with a flame retardant effective amount of at least one phosphate ester, e.g., a solid phosphate ester as described herein. In yet another embodiment there is provided a polyolefin composition wherein the polyolefin is apolyethylene and/or polypropylene film.

In yet another embodiment there is provided a polyethylene and/or polypropylene fiber or film or foam comprising the polyolefin composition herein. In yet another embodiment there is provided a polyethylene and/or polypropylene fiber or film or foam that comprises the phosphate ester herein or has been treated with the phosphate ester herein. In yet another embodiment there is provided a polyolefin composition wherein the polyolefin is a polyethylene and/or polypropylene foam.

In yet another embodiment herein there is provided a polyolefin foam comprising the polyolefin composition herein, and there is also provided a polyolefin foamed molded article. In one other embodiment herein there is provided a polyolefin foam which comprises the phosphate ester described herein and/or has been treated with the phosphate ester described herein. In one embodiment the polyolefin foamed molded article is a polypropylene foam molded article that comprises the phosphate ester as described herein, e.g., a solid phosphate ester. In one embodiment herein it will be understood that the use of the phosphate ester in any composition, fiber, film and foam described herein can be in a flame retardant effective amount as described herein. In one specific non-limiting embodiment there is provided a polypropylene foam which contains a flame retardant effective amount of hydroquinone bis(diphenyl phosphate), e.g. a molded polypropylene foam containing said flame retardant effective amount of hydroquinone bis(diphenyl phosphate).

In another embodiment herein there is provided a method of making a flame-retarded polyolefin composition which comprises contacting a polyolefin and a flame retardant effective amount of a solid phosphate ester of the general formula (1); 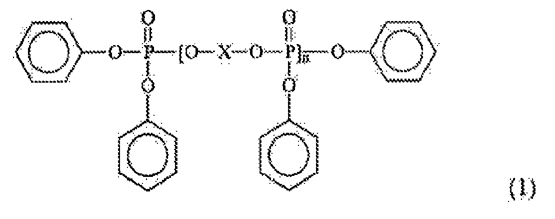 wherein n has an average value of from 1.0 to 2.0 and X is a divalent arylene moiety bonded to both of the oxygen atoms of hydroquinone, and wherein the phosphate ester is in the absence of halogen.

The flame retarded polyolefin fiber of the present invention may be either of a staple or a lint, and the lint may be any yam type of a monofilament yam and a multifilament yarn. And it may be a fiber, such as a spun bond yam, composing a non-woven fabric when the non-woven fabric is made directly from spun yam. Further, the size of the flame retarded polyolefin fiber is not specifically limited, and an arbitrary size of fiber can be used. The fiber sectional form of the flame retarded polypropylene fiber may contain different sections such as a circular section, a hollow section, a triangle and the like. The fibers of the present invention may be produced by methods known to the industry, such as solution spinning, melt spinning and "fibrillated" or slit films. The fibers may further be made into woven, non-woven or knitted fabrics as is known to the art.

Further, the flame retarded polyolefin film of the present invention is not limited to a film composed of a single layer, and may be a multi-layer film. And the film may be a drawn or undrawn film. Further, the film of the present invention also includes a split yam which is its modified mode.

A usual resin film production process such as T-die method or inflation method can be appropriately adopted in order to produce the flame retarded polyolefin film of the present invention.

In the present specification, polyolefin resin pre-expanded particles or polyolefin resin pre-expanded particles containing a flame retardant may simply be referred to as "pre-expanded particles. Pre-expanded particles can be made by methods known in the art.

In-mold foamed article obtained by in-mold molding polyolefin resin pre-expanded particles may be simply referred to as "formed article."

The flame retardant pre-expanded particles can be prepared by melt-kneading a polyolefin resin, such as those described herein, with the phosphate flame retardant, impregnating polyolefin particles with volatile blowing agent under high pressure and temperature and releasing the particles in low pressure zone to pre-expand them.

Further the pre-expanded particles of the present invention are molded to produce molded articles.

In one non-limiting embodiment of the polyolefin composition, the phosphate ester is in the absence of any one or more of halogen, ammonium moieties, or nitrogen atoms.

In one non-limiting embodiment of the polyolefin composition, the phosphate ester is soluble in the polyolefin resin at any temperature above the melting temperature of the polyolefin being used.

### EXAMPLES

### Materials

### Polymers:

EVA - ethylene vinyl acetate, Elvax 265 brand of Du Pont
PP - polypropylene random copolymer, R12C-00 brand of INEOS
LLDPE - linear low density polyethylene, Dowlex 2027G brand of Dow Chemicals

### Flame retardant additives:

TPP - triphenyl phosphate, Phosflex TPP brand of Akzo Nobel Chemicals (melts at 48°C)
HDP - hydroquinone bis(diphenyl phosphate), material of formula I (melts at 108°C) available from ICL-IP.

### Free radical generator:

Dicumyl - C-C free radical generator, available from Si Group
EVA, PP or LLDPE was added with powder of HDP or TPP at 1, 3 or 5 weight percent. In one embodiment of this invention PP was added with 5 weight percent HDP or TPP and 0.5 weight percent of Dicumyl, Dicumyl was not added to LLDPE or EVA formulations because cross-linking phenomenon can occur during extrusion. These mixtures were dry blended in a polyethylene bag before feeding in the extruder.

### Compounding

Compounding was performed using a C. W. Brabender conical twin screw co-rotating extrader with an L/D = 10.6 using temperature profile recommended by resin manufacturers, The mixtures were manually fed into extruder using a funnel. The extradate was water cooled and pelletized using a Conair model 304 pelletizer. The resulting pellets were dried in a forced air oven at 80°C for 16 hours. The specimens of 6x1/2x1/8 inch bars were prepared by injection molding using an Arburg 270S Allrounder 250∼150 press using injecting molding conditions recommended by resin manufacturers. These specimens were then compressed into 400 µm films using Wabash 12-1212 press.

### Test Method

Blooming out or exudation of flame retardant to the polymer surface was studied after compounding, injection molding and oven heating. The studying of any blooming out was done after compounding on the oven dried pellets and again right after injection molding on the bars and then a third time three days after heating of the injected molded specimens at 70°C for 72 hours, and was done by visual observation. The injection molded specimens were placed into an air circulated oven at 70°C for 72 hours prior to conducting the third blooming out study. Only specimens passing the blooming out tests had separate samples of the same group of specimens further tested in the flammability test. The combustion tests and blooming tests herein are separate and were not done on the same specimens.

Flammability of the films was accessed using UL-94 horizontal test using an Atlas HVUL chamber. The film of 7x1.5 inch was mounted into metal frame and the flame propagation and burning time was measured applying ignition of standard Bunsen burner. In addition to fail/pass criteria also length of flame propagation and weight loss due to burn of the film were recorded as an average of 3 experiments, but only where the film passed the UL-94 horizontal test.

### Results

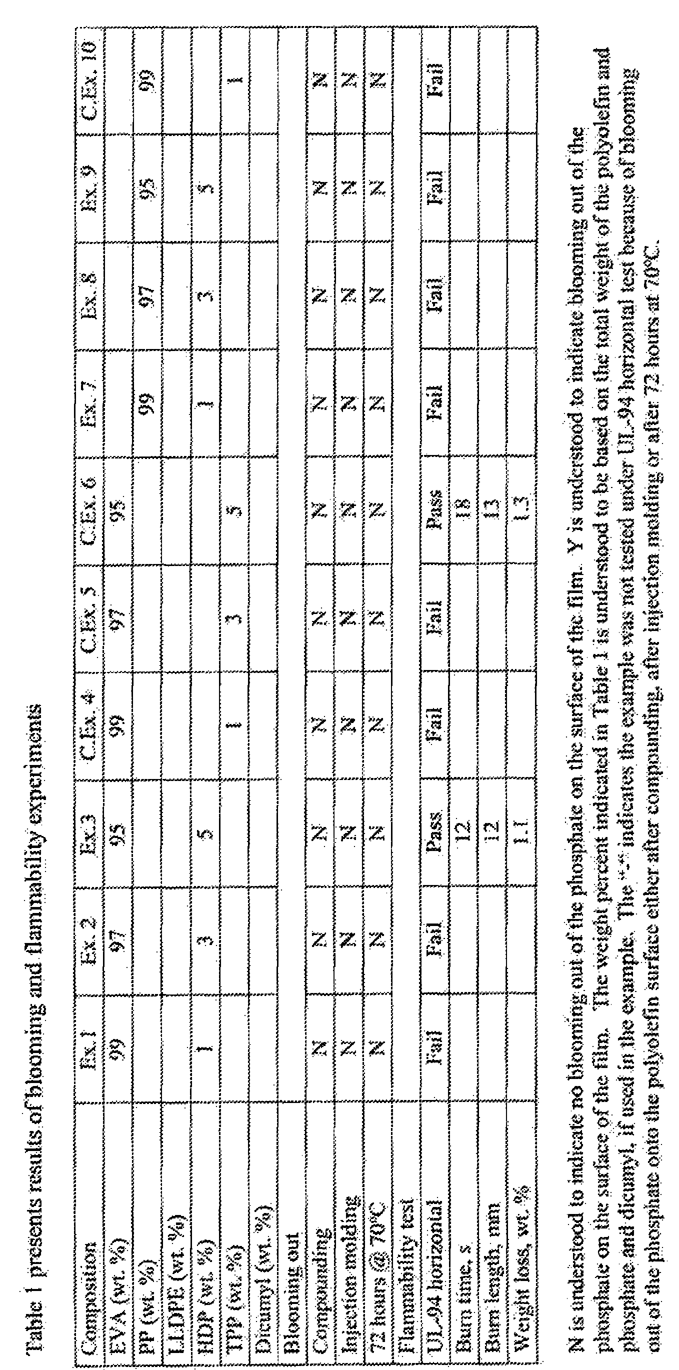

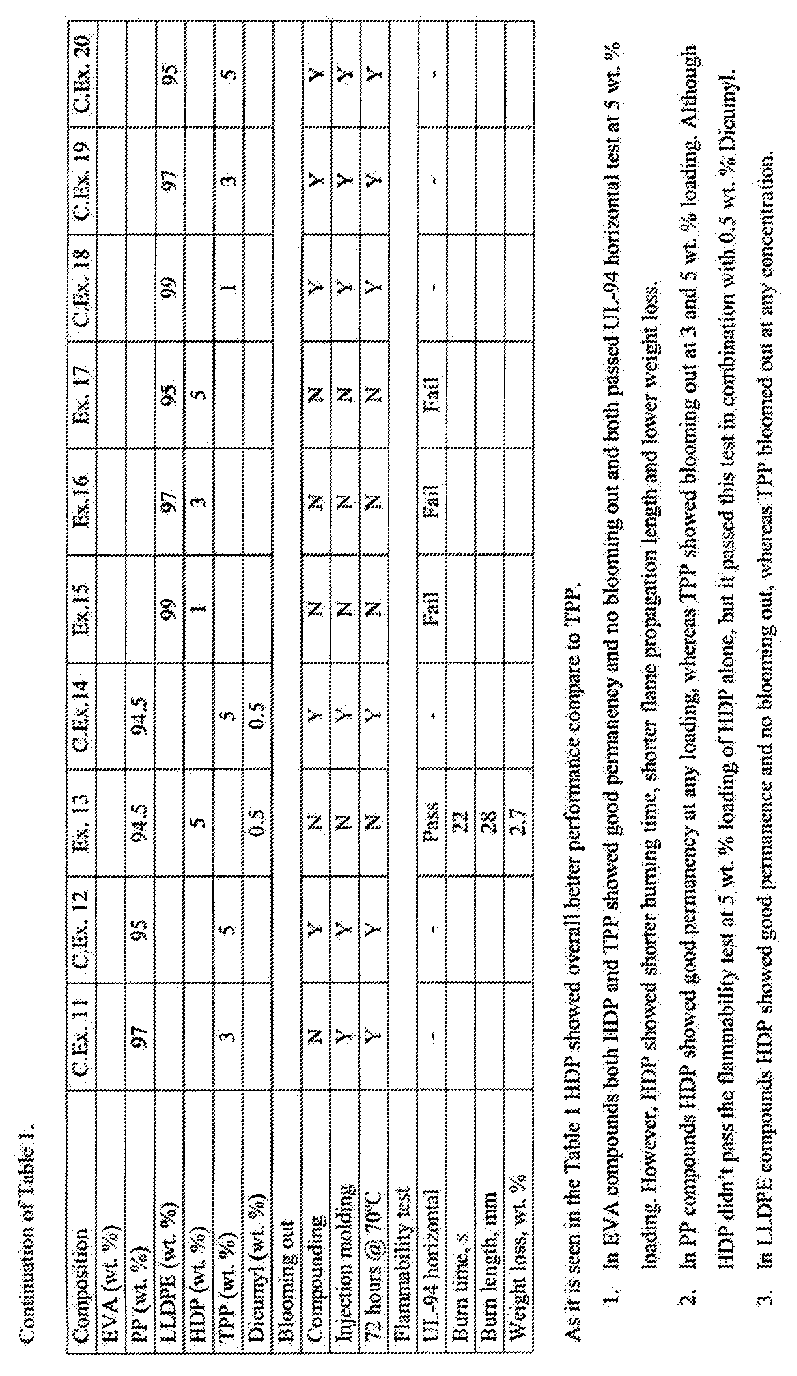

## Claims

1. A polyolefin composition comprising a polyolefin and a flame retardant effective amount of a solid phosphate ester of the general formula (1): 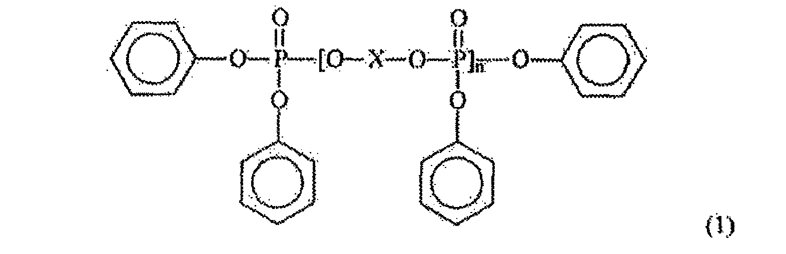 wherein n has an average value of from about 1.0 to 2.0 and X is a divalent arylene moiety bonded to both of the oxygen atoms of hydroquinone, and wherein the phosphate ester is in the absence of halogen.

2. The polyolefin composition of Claim 1 being in the form of a fiber or a film or a foam, and any combination thereof.

3. The polyolefin composition of Claim 1 wherein the solid phosphate ester is one of the following:
i) is hydroquinone bis(diphenyl phosphate),
ii) is present in an amount of from 0.5 weight percent to 5.0 weight percent based on the total weight of the polyolefin composition,
iii) has a melting temperature of at least 80°C.

4. The polyolefin composition of Claim 1 where the polyolefin is one of the following:
i) is selected from polypropylene and its copolymers,
ii) is selected from polyethylene and its copolymers.

5. The polyolefin composition of Claim 1 in the absence of NOR type hindered amine light stabilizer.

6. The polyolefin composition of Claim 1, further comprising an effective amount of free-radical generator.

7. The polyolefin composition of Claim 6, where:
i) free-radical generator is stable from 150°C to 250°C, or
ii) free-radical generator is 2,3-dimethyl-2,3-diphenyl-butane or 2,3-dimethyl-2,3-diphenyl-hexane.

8. The polyolefin composition of Claim 1containing at least one additional component selected from the group consisting of ultraviolet and light stabilizer, UV screener, UV absorber, heat stabilizer, antioxidant, coloring pigment, dispersing agent, fluorescent bleaching agent, delustering agent, lubricant, anti-static agent, antibacterial agent and combinations thereof.

9. A polyolefin textile comprising the polyolefin composition of Claim 2 being in the form of a fiber.

10. The polyolefin composition of Claim 2 being in the form of a film, wherein one of the following:
i) the polyolefin film has a thickness of 500 µm or less,
ii) the polyolefin film is a polyethylene and/or polypropylene film.

11. A polyolefin molded article comprising the polyolefin composition of Claim 2 being in the form of a foam.

12. The polyolefin composition of Claim 2 being in the form of a fiber wherein the polyolefin fiber is a polyethylene and/or polypropylene fiber.

13. The polyolefin foam of Claim 2 being in the form of a foam wherein the polyolefin foam is a polyethylene and/or polypropylene foam.

14. A method of making a flame-retarded polyolefin composition which comprises contacting a polyolefin and a flame retardant effective amount of a solid phosphate ester of the general formula (1) : 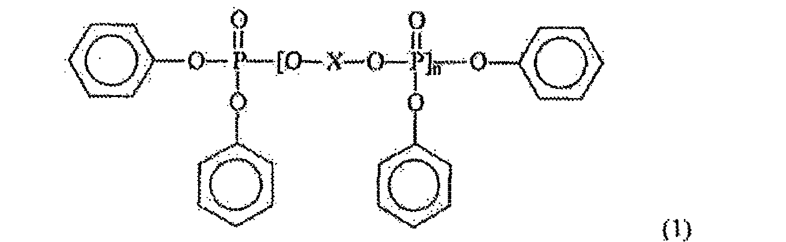 wherein n has an average value of from 1.0 to 2.0 and X is a divalent arylene moiety bonded to both of the oxygen atoms of hydroquinone, and wherein the phosphate ester is in the absence of halogen.

## Patentansprüche

1. Eine Polyolefinzusammensetzung, umfassend ein Polyolefin und eine flammhemmende, effektive Menge eines festen Phosphatesters der allgemeinen Formel (1): 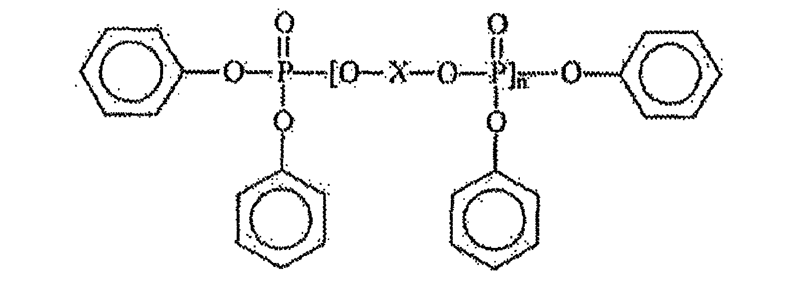 wobei n einen Durchschnittswert von etwa 1,0 bis 2,0 aufweist und X ein zweiwertiger Arylrest ist, der an beide der Sauerstoffatome des Hydrochinons gebunden ist, und wobei kein Halogen im Phosphatester anwesend ist.

2. Die Polyolefinzusammensetzung nach Anpruch 1, die in Form einer Faser oder eines Filmes oder eines Schaums und jeder Kombination daraus vorliegt.

3. Die Polyolefinzusammensetzung nach Anspruch 1, wobei der feste Phosphatester eines der folgenden ist:
i) ein Hydrochinon bis Diphenylphosphat,
ii) in einer Menge von 0,5 Gewichtsprozent bis 5,0 Gewichtsprozent in Bezug auf das Gesamtgewicht der Polyolefinzusammensetzung vorhanden ist,
iii) eine Schmelztemperatur von mindestens 80°C aufweist.

4. Die Polyolefinzusammensetzung nach Anspruch 1, in der das Polyolefin eines der folgenden ist:
i) ausgewählt ist aus Polypropylen und seinen Copolymeren,
ii) ausgewählt ist aus Polyethylen und seinen Copolymeren.

5. Die Polyolefinzusammensetzung nach Anspruch 1 ohne einen gehinderten Aminlichtstabilisator vom NOR-Typ.

6. Die Polyolefinzusammensetzung nach Anspruch 1, ferner umfassend eine effektive Menge eines Erzeugers von freien Radikalen.

7. Die Polyolefinzusammensetzung nach Anspruch 6, in der
i) der Erzeuger von freien Radikalen von 150°C bis 250°C stabil ist, oder
ii) der Erzeuger von freien Radikalen 2,3-Dimethyl-2,3-diphenyl-butan oder 2,3-Dimethyl-2,3-diphenyl-hexan ist.

8. Die Polyolefinzusammensetzung nach Anspruch 1, enthaltenden mindestens einen zusätzlichen Bestandteil, ausgewählt aus der Gruppe bestehend aus Ultraviolett- und Lichtstabilisator, UV-Blocker, UV-Absorber, Hitzestabilisierer, Antioxidans, Färbungspigment, Dispergiermittel, fluoreszierendes Bleichungsmittel, Mattierungsmittel, Schmiermittel, antistatisches Mittel, antibakterielles Mittel und Kombinationen davon.

9. Ein Polyolefingewebe, umfassend die Polyolefinzusammensetzung nach Anspruch 2, die in Form einer Faser vorliegt.

10. Die Polyolefinzusammensetzung nach Anspruch 2, die in Form eines Films vorliegt, wobei eines der folgenden:
i) der Polyolefinfilm eine Dicke von 500 µm oder weniger aufweist,
ii) der Polyolefinfilm ein Polyethylen und/oder Polypropylenfilm ist.

11. Ein Polyolefin-Formkörper, umfassend die Polyolefinzusammensetzung nach Anspruch 2, die in Form eines Schaums vorliegt.

12. Die Polyolefinzusammensetzung nach Anspruch 2, die in Form einer Faser vorliegt, wobei die Polyolefinfaser eine Polyethylen- und/oder Polypropylenfaser ist.

13. Der Polyolefinschaum nach Anspruchs 2, der in Form eines Schaums vorliegt, wobei der Polyolefinschaum ein Polyethylen- und/oder Polypropylenschaum ist.

14. Ein Verfahren zur Herstellung einer flammhemmenden Polyolefinzusammensetzung, welche das in Kontakt bringen eines Polyolefins und einer flammhemmenden, effektiven Menge eines festen Phosphatesters der allgemeinen Formel (1) umfasst: 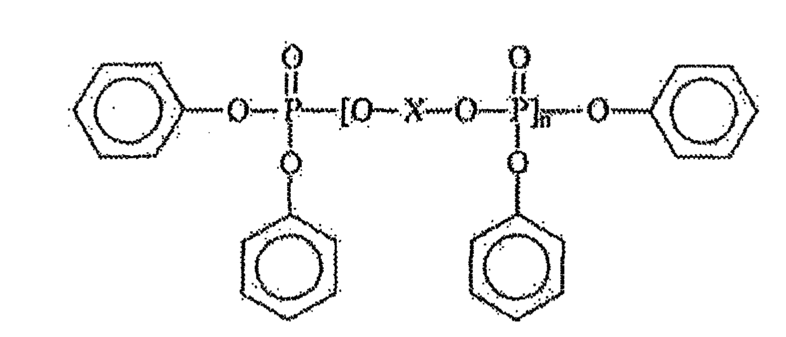 wobei n einen Durchschnittswert von 1,0 bis 2,0 aufweist und X ein zweiwertiger Arylrest ist, der an beide Sauerstoffatome des Hydrochinons gebunden ist, und wobei kein Halogen im Phosphatester enthalten ist.

## Revendications

1. Composition de polyoléfine comprenant une polyoléfine et une quantité efficace du point de vue ignifuge d'un ester phosphate solide de formule générale (1) : 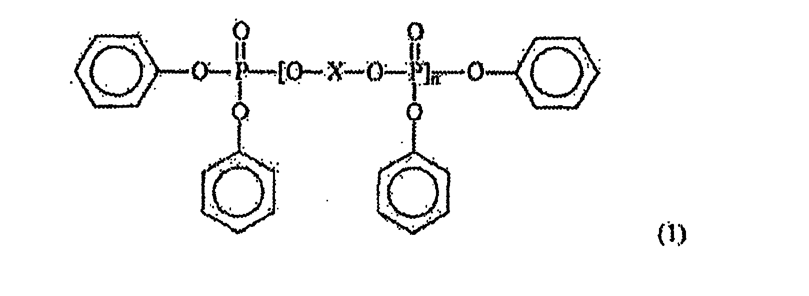 où n a une valeur moyenne d'environ 1,0 à 2,0 et X est un groupement arylène divalent lié aux deux atomes d'oxygène de l'hydroquinone, et où l'ester phosphate est en l'absence d'halogène.

2. Composition de polyoléfine selon la revendication 1 qui est sous forme d'une fibre ou d'un film ou d'une mousse, et de toute combinaison de ceux-ci.

3. Composition de polyoléfine selon la revendication 1 où l'ester phosphate solide est l'un des suivants :
i) est le bis(diphénylphosphate) d'hydroquinone,
ii) est présent en une quantité de 0,5 pourcent en poids à 5,0 pourcent en poids sur la base du poids total de la composition de polyoléfine,
iii) a une température de fusion d'au moins 80°C.

4. Composition de polyoléfine selon la revendication 1 où la polyoléfine est l'une des suivantes :
i) est choisie parmi le polypropylène et ses copolymères,
ii) est choisie parmi le polyéthylène et ses copolymères.

5. Composition de polyoléfine selon la revendication 1 en l'absence de stabilisant à la lumière amine à empêchement stérique de type NOR.

6. Composition de polyoléfine selon la revendication 1 comprenant en outre une quantité efficace de générateur de radicaux libres.

7. Composition de polyoléfine selon la revendication 6 où
i) le générateur de radicaux libres est stable de 150°C à 250°C, ou bien
ii) le générateur de radicaux libres est le 2,3-diméthyl-2,3-diphényl-butane ou le 2,3-diméthyl-2,3-diphényl-hexane.

8. Composition de polyoléfine selon la revendication 1 contenant au moins un composant supplémentaire choisi dans le groupe consistant en un stabilisant aux UV et à la lumière, un agent formant écran aux UV, un absorbeur d'UV, un stabilisant à la chaleur, un antioxydant, un pigment colorant, un agent dispersant, un agent de blanchiment fluorescent, un agent délustrant, un lubrifiant, un agent antistatique, un agent antibactérien et leurs combinaisons.

9. Textile à base de polyoléfine comprenant la composition de polyoléfine selon la revendication 2 qui est sous forme d'une fibre.

10. Composition de polyoléfine selon la revendication 2 qui est sous forme d'un film, où l'un des suivants :
i) le film de polyoléfine a une épaisseur de 500 µm ou moins,
ii) le film de polyoléfine est un film de polyéthylène et/ou polypropylène.

11. Article moulé à base de polyoléfine comprenant la composition de polyoléfine selon la revendication 2 qui est sous forme d'une mousse.

12. Composition de polyoléfine selon la revendication 2 qui est sous forme d'une fibre où la fibre de polyoléfine est une fibre de polyéthylène et/ou polypropylène.

13. Mousse de polyoléfine selon la revendication 2 qui est sous forme d'une mousse où la mousse de polyoléfine est une mousse de polyéthylène et/ou polypropylène.

14. Procédé de production d'une composition de polyoléfine ignifugée qui comprend la mise en contact d'une polyoléfine et d'une quantité efficace du point de vue ignifuge d'un ester phosphate solide de formule générale (1) : 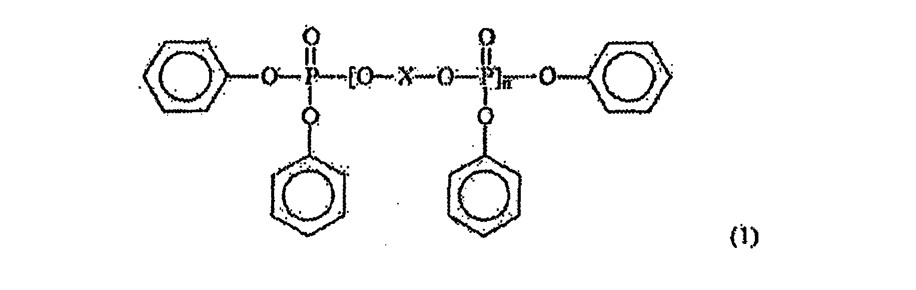 où n a une valeur moyenne de 1,0 à 2,0 et X est un groupement arylène divalent lié aux deux atomes d'oxygène de l'hydroquinone, et où l'ester phosphate est en l'absence d'halogène.
